# EUROPEAN PATENT APPLICATION

(11) **EP 2 789 883 A1**
(43) Date of publication of application: **15.10.2014**
(21) Application number: 12855342.7
(22) Date of filing: 07.12.2012
(51) Int. Cl.: F16K 1/32, C23C 26/00, F16K 1/36, F16K 25/04

(54) **VALVE DEVICE, METHOD FOR PRODUCING VALVE DEVICE, AND METHOD FOR REPAIRING VALVE DEVICE**

(30) Priority: 08.12.2011 JP 2011268737
(71) Applicant: Kabushiki Kaisha Toshiba, Minato-ku, Tokyo 105-8001 (JP)
(72) Inventor: SHINDO, Osamu, Tokyo 105-8001 (JP)
(74) Representative: Kramer - Barske - Schmidtchen
(86) International application number: PCT/JP2012/081837
(87) International publication number: WO 2013/085046

(57) **Abstract**

According to an embodiment, a valve apparatus (1) includes a movable member (9 or 5) operating in conjunction with opening and closing of a valve, and a stationary member (10, 4, or 8) in sliding or abutting contact with the movable member (9 or 5). The valve apparatus (1) includes a cladding portion (11 or 211) that is integrally formed on a sliding-contact surface or an abutting contact surface of at least one of the movable member (9 or 5) or the stationary member (10, 4, or 8). The cladding portion (11 or 21) is formed by inducing a pulsed discharge between an electrode (102), which is formed of a molded body consisting mainly of a metal, and a treatment target portion of the movable member (9 or 5) or the stationary member (10, 4, or 8), so as to weld and deposit a material of the electrode (102) on a surface of the treatment target portion.

## Description

### Technical Field

Embodiments of the present invention relate to a valve apparatus, a method of manufacturing the valve apparatus, and a method of repairing the valve apparatus.

### Background Art

A steam turbine in a thermal power plant or the like includes various valve apparatuses such as a main steam stop valve, a steam control valve, a steam stop valve, a reheat steam stop valve, an intermediate gate valve, and a turbine bypass valve, to control inflow of steam.

For the valve apparatus, the following configuration is widely known for a combination of materials for a movable member and a stationary member that is in sliding contact with the movable member, for example, a combination of materials for a valve rod and a bushing. That is, for enhanced wear resistance and lengthened service lives of the materials, for example, 12% chromium-containing steel is used as the material for the bushing, and 30 to 50% nickel-containing austenitic heat-resistant alloy is used for the material for the valve rod. Furthermore, as a surface treatment method of these members, nitriding treatment is utilized.

As is also known, the following treatment is applied to seat portions of a valve seat and a valve body which are in abutting contact with each other, in order to prevent the seat portions from suffering thermal shock caused by an inflow and outflow of superheated steam of high temperature and high pressure, and damage caused by wear resulting from erosion, corrosion, or the like. That is, the seat portions undergo cladding by welding of a cobalt-based hard alloy offering thermal shock resistance and oxidation resistance and having a higher hardness than a valve base material.

In recent years, every effort has been made to improve the efficiency of thermal power plants, and steam temperature has been progressively increasing to 593°C, to 600°C, and to 610°C. The steam temperature is expected to be 700°C or higher.

On the other hand, in the nitriding treatment applied to contact surfaces of the valve rod and the bushing, the metal surfaces are activated under high temperature and are likely to react with hot steam in the surrounding atmosphere to generate an oxide film. The generated film is peeled off into pieces during every repeated opening and closing operation, and the peeled-off pieces of the film are locally deposited in recessed portions of the surface as a result of sliding of the valve rod. The deposited pieces fill the gap between the valve rod and the bushing to cause sticking of the valve rod. Furthermore, a nitride layer formed on the contact surfaces of the valve rod and the bushing has the property of being decomposed at approximately 500°C or higher based on a nitriding treatment temperature and then softened. Additionally, when the nitride layer is very thin, the nitride layer is lost, causing wear to progress rapidly.

In addition, the cobalt-based hard alloy cladded by welding on the seat portion of the valve seat and the valve body is subjected to only an insignificant decrease in hardness while the temperature is being elevated. However, due to insufficient toughness of the cobalt-based hard alloy, the welded metal may be cracked by thermal stress when the rate of cooling after the welding is high. Furthermore, the valve base material itself, which is cladded by welding, may be cracked depending on the nature of the valve base material. When the content of Cr in the valve base material is increased in order to improve the strength and oxidation resistance of the valve base material, an increased difference occurs in the coefficient of linear expansion between the valve base material and the cobalt-based hard alloy cladded by welding on the valve body or the seat portion of the valve seat. Consequently, the cobalt-based hard alloy cladding portion is likely to be cracked in a radial direction thereof.

Under the circumstances, it is desired to present a technique for improving the reliability of components of the valve apparatus.

### Disclosure of Invention

According to an embodiment, a valve apparatus includes a movable member operating in conjunction with opening and closing of a valve, and a stationary member in sliding or abutting contact with the movable member. The valve apparatus includes a cladding portion that is integrally formed on a sliding-contact surface or an abutting contact surface of at least one of the movable member or the stationary member. The cladding portion is formed by inducing a pulsed discharge between an electrode, which is formed of a molded body consisting mainly of a metal, and a treatment target portion of the movable member or the stationary member, so as to weld and deposit a material of the electrode on a surface of the treatment target portion.

### Brief Description of Drawings

FIG. 1 is a cross-sectional view showing an example of a configuration of a valve apparatus common to a first to fourth embodiments;
FIG. 2 is a diagram showing the appearance of a valve rod with a cladding portion formed thereon according to the first embodiment;
FIG. 3 is a cross-sectional view showing a cross-sectional shape of the valve rod according to the first embodiment and taken along a portion A-A shown in FIG. 2;
FIG. 4 is a conceptual drawing showing the principle of a cladding method according to the first embodiment;
FIG. 5 is a diagram illustrating an example of a specific method of manufacturing a valve rod integrated with a cladding portion according to the first embodiment;
FIG. 6 is a diagram showing the appearance of a valve rod with a cladding portion formed thereon according to a second embodiment;
FIG. 7 is a vertical cross-sectional view showing a seat portion of a valve seat shown in FIG. 3 according to a third embodiment;
FIG. 8 is an enlarged vertical cross-sectional view showing a portion B shown in FIG. 7 according to the third embodiment;
FIG. 9 is a diagram illustrating an example of a specific method of manufacturing a valve seat integrated with a cladding portion according to the third embodiment;
FIG. 10 is an enlarged diagram showing a notable portion in FIG. 9 according to the third embodiment;
FIG. 11 is a diagram specifically showing formation of a cladding portion on the valve seat according to the third embodiment;
FIG. 12 is a diagram specifically showing formation of a cladding portion on a valve body according to the third embodiment;
FIG. 13 is a vertical cross-sectional view showing the shape of the seat portion formed before cladding is performed on the valve seat shown in FIG. 1 according to the fourth embodiment;
FIG. 14 is an enlarged vertical cross-sectional view showing a portion C shown in FIG. 13 according to the fourth embodiment;
FIG. 15 is a diagram illustrating an example of a specific repairing method according to the fourth embodiment; and
FIG. 16 is an enlarged diagram showing a notable portion in FIG. 15 according to the fourth embodiment.

Mode for Carrying Out the Invention Embodiments will be described below with reference to the drawings.

### (First Embodiment)

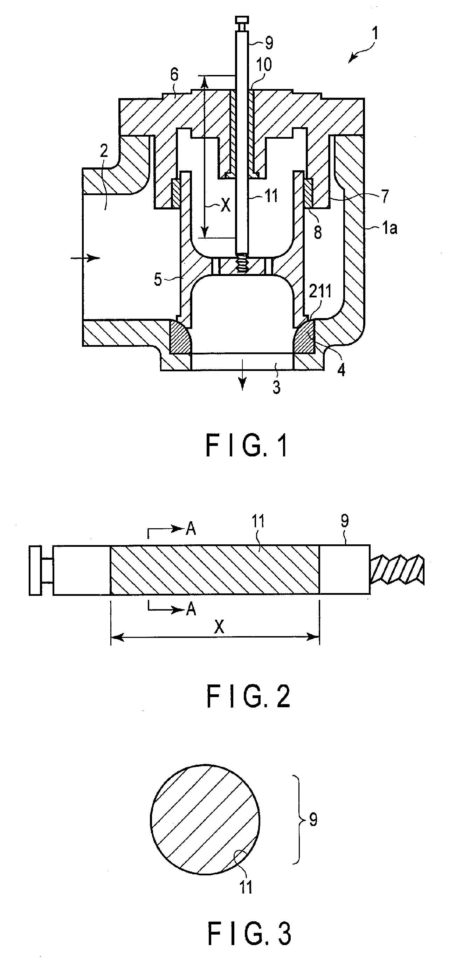

First, a first embodiment will be described with reference to FIG. 1 to FIG. 5.

FIG. 1 is a cross-sectional view showing an example of a configuration of a valve apparatus common to the first to fourth embodiments.

A steam valve 1 is a valve apparatus for a steam turbine installed in, for example, a thermal power plant. The steam valve 1 comprises a valve casing 1a with a steam inlet 2 and a steam outlet 3, and a cylindrical valve body 5 for reciprocating operation which comes into abutting contact, at one end of the valve body 5, with a valve seat 4 provided at the valve outlet 3 of the valve casing 1a to open and close the steam outlet 3. The valve body 5 is in sliding contact, via a seal ring 8, with an inner peripheral surface of a cylindrical guide section 7 provided on an inner surface side of a valve lid (upper lid) 6 valve casing 1a. The valve body 5 is driven in a reciprocating manner along an axial direction by a valve rod 9 connected to a central portion of the valve body 5. The valve rod 9 is inserted through a bushing 10 provided in the valve casing 6 so that an outer peripheral surface of the valve rod 9 is in sliding contact with the bushing 10. An external projecting end of the valve rod 9 is connected to a driving actuator (not shown in the drawings).

A cladding portion 11 is integrally formed on a sliding-contact surface of at least one of the valve rods 9 or the bushings 10. The cladding portion 11 is formed by inducing a pulsed discharge between an electrode, which is formed of a molded body consisting mainly of a metal, and a treatment target portion of the valve rod 9 or the bushing 10 to allow the material of the electrode to be welded and deposited on a surface of the treatment target portion. "X" in FIG. 1 denotes the range within which the cladding portion 11 formed on the sliding-contact surface of the valve rod 9 is applied.

Here, an example in which the cladding portion 11 is formed on the valve rod 9, serving as a movable member, will be described. Additionally, of course, a similar cladding portion may be formed on the bushing 10, which provides a sliding section along with the valve rod 9 and serves as a stationary member.

FIG. 2 is a diagram showing the appearance of the valve rod 9 with the cladding portion 11 formed thereon. Like "X" in FIG. 1, "X" in FIG. 2 denotes the range within which the cladding portion 11 formed on the sliding-contact surface of the valve rod 9 is applied.

FIG. 3 is a cross-sectional view showing a cross-sectional shape of the valve rod 9 according to the first embodiment and taken along a portion A-A shown in FIG. 2. As shown in FIG. 3, the cladding portion 11 is formed on an outer surface of the valve rod 9. The valve rod 9 with the cladding portion 11 providing a sliding-contact surface is finished by machining to have a predetermined shape, predetermined dimensions, and a predetermined surface roughness, by machining the cladding portion 11.

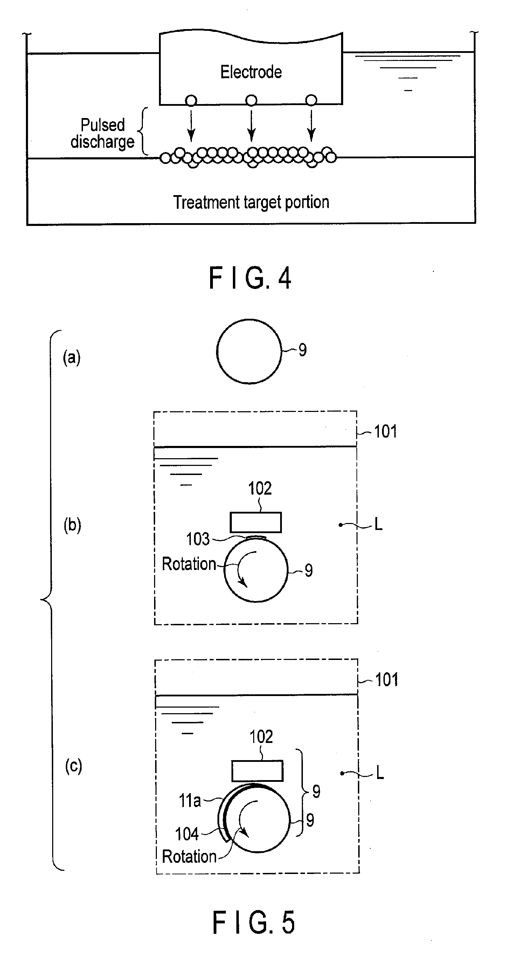

FIG. 4 is a conceptual drawing showing the principle of a cladding method. As shown in FIG. 4, a pulsed discharge is induced in an electrically insulating liquid or gas between the electrode, which is formed of a cobalt-based hard alloy or the like, and the treatment target portion of the valve rod with a micro gap held between the electrode and the treatment target portion. The resultant discharge energy is used so as to weld and deposit the material of the electrode on the surface of the treatment target portion. The cladding portion thus formed includes a penetrant diffusion layer formed by penetration and diffusion of particles of the material of the electrode through the surface of the treatment target portion and a deposit layer formed by welding and deposition of the particles of the material of the electrode on the penetrant diffusion layer. This method involves low heat input and thus allows cladding to be achieved without substantially deforming a workpiece. Furthermore, the component of the electrode and the workpiece are joined together while being melted, advantageously preventing the cladding portion 11 from being peeled off.

Next, an example of a specific method of manufacturing the valve rod 9 integrated with the cladding portion 11 will be described with reference to FIG. 5.

In this manufacturing method, a process of forming the cladding portion 11 on the surface of the valve rod 9 includes a (I) thin-film forming step and an (II) cladding layer forming step described below.

### (I) Thin-film forming step

The valve rod 9 (raw material) shown in (a) of FIG. 5 is set in position in a processing tank 101 in an electric discharge machine (illustration of the electric discharge machine is mostly omitted) where electrically insulating oil L is filled in the processing tank 101 as shown in (b) of FIG. 5.

The valve rod 9 is finished to have an outer diameter the dimension of which is determined taking into account an cladding thickness resulting from electric discharge machining. The valve rod 9 is held in a valve rod holding apparatus in which the valve rod 9 can be rotated at a very low speed by a rotating apparatus (not shown in the drawings), while being fed by about 10 mm in an axial direction during one rotation.

A pulsed discharge is induced in the oil L stored in the processing tank 101 between the valve rod 9 and a tip surface of an electrode 102 with a micro gap held between the valve rod 9 and the tip surface of the electrode 102. The resultant discharge energy is used to deposit, diffuse, and/or weld the material of the electrode 102 on the valve rod 9 to form a thin film 103 on the valve rod 9.

The phrase "deposit, diffuse, an/or weld" means to include all of the following: "deposition", "diffusion", "welding", "a mixture of two phenomena including deposition and diffusion", "a mixture of two phenomena including deposition and welding", "a mixture of two phenomena including diffusion and welding", and "a mixture of three phenomena including deposition, diffusion, and welding".

Here, the electrode 102 is a shaped electrode comprising a molded body formed by compressing a powder consisting mainly of a metal based on pressing or performing heating treatment on the powder. A suitable material for the electrode 102 is a cobalt-based hard alloy or a nickel-based hard alloy, which offers thermal shock resistance and oxidation resistance and which has a higher hardness than a valve base material.

The electrode 102 may be shaped using, instead of compression such as pressing, another well-known manufacturing method. Desirably, the lateral cross section of the electrode 102 is shaped, for example, like a rectangle that is equal to the valve rod 9 in width and axial length, or a surface of the electrode 102 opposite to the valve rod 9 is shaped to form a circular arc conforming to an outer peripheral surface of the valve rod 9. Alternatively, the cross section and surface of the electrode 102 may have other shapes.

### (II) Cladding layer forming step

After the (I) thin-film forming step ends, a pulsed discharge is induced in the oil L in the processing tank 101 between the valve rod 9 with a thin film formed thereon and the tip surface of the electrode 102, with a micro gap held between the valve rod 9 and the tip surface of the electrode 102 as shown in (c) of FIG. 5. The resultant discharge energy is used to grow the thin film 103 formed on the valve rod 9 to form a cladding portion 11a on the valve rod 9.

At this time, in the vicinity of the boundary between the cladding portion 11a and the base material of the valve rod 9, a fusion portion (fusion layer) 104 is formed which has a graded composition with a composition ratio varying in a thickness direction in a graded manner. Here, the thickness of the fusion portion 104 is set to, for example, 20 µm or less by selecting appropriate discharge conditions when the cladding portion 11a is formed (because, when the thickness of the fusion layer 104 exceeds 20 µm, the amount of input heat increases to reduce the strength of the base material). This allows the adhesion strength of the cladding portion 11a to be improved while preventing the valve rod 9 from being deformed.

After the cladding, a part of the cladding portion 11a is machined to finish the valve rod 9 so that the valve rod 9 has a predetermined shape, a predetermined size, and a predetermined surface roughness. Thus, the valve seat 4 with the cladding portion 11 is completed.

The first embodiment adopts the manufacturing method based on electric discharge machining and thus involves low input heat. This allows the cladding to be performed on the workpiece without substantially deforming the workpiece. Thus, although the thickness of the cladding portion 11 is not limited, the thickness is desirably set to 300 µm or less so as to sufficiently demonstrate the properties of the cobalt-based hard alloy itself (for example, the properties based on hardness).

The role of the oil L in the processing tank 101 is to prevent processing debris of the electrode 102 resulting from the pulsed discharge from flying and being deposited back on the electrode 102. As the discharge time gets longer, the tip portion of the electrode 102 becomes mostly covered with bubbles, and thus, the resultant effects of the discharge remain unchanged even when the discharge is initially induced in a gas.

According to the first embodiment described above, the cladding portion 11 provided on sliding-contact surface of the valve rod 9 or bushing 10 of the steam valve 1 is formed by electric discharge machining using the cobalt-based hard alloy or the like. Consequently, the cladding portion 11 is a functionally graded material with a graded composition and thus has a coefficient of linear expansion approximately equal to the coefficient of linear expansion of the base material of the valve rod 9 or the bushing 10 in the vicinity of a boundary where the cladding portion 11 is in contact with the base material. Thus, approximately no difference occurs in the coefficient of linear expansion, allowing possible residual stress in the cladding portion 11 to be prevented. As a result, the cladding portion 11 formed on the sliding-contact surface of the valve rod 9 or the bushing 10 can be prevented from being cracked.

Furthermore, the first embodiment involves approximately no difference in the coefficient of linear expansion, thus enabling extension of the range of selection of the base material of the valve rod 9 or the bushing 10 and the material of the cladding portion 11 and the combination of the materials in accordance with steam temperature and high temperature strength. Examples of the base material selected for the valve rod 9 or the bushing 10 include chromium-molybdenum steel, chromium-molybdenum-vanadium steel, chromium-molybdenum-tungsten-vanadium steel, 9% chromium-containing steel, 12% chromium-containing steel, an Ni-based heat resistant alloy, and a Co-based heat resistant alloy. It is to be noted that the first embodiment is not limited to existing materials, and heat resistant alloy steel comprising ferrite steel, martensitic steel, or austenitic steel is applicable. Furthermore, the manufacturing method based on electric discharge machining according to the first embodiment is, of course, applicable to a new material developed in the future in response to more demanding steam conditions.

Besides the cobalt-based hard alloy or the nickel-based hard alloy, examples of the material for the electrode 102 providing the cladding portion 11 include fine-ceramic materials such as chromium nitride (CrN), titanium aluminum nitride (TiAlN), titanium tungsten nitride (Ti-W)N, titanium molybdenum carbide (Ti-Mo)C, chromium silicon nitride (CrSiN), and titanium silicon nitride (TiSiN), which have an oxidation onset temperature of 800°C or higher and which offer high oxidation resistance at high temperature. The electrode 102 is possible which is shaped using a powder of any of the above-described fine ceramics, or a powder obtained by mixing the power of the fine ceramics with any of the above-described hard alloys. Even if a new material is developed in the future in response to more demanding steam conditions, the material is of course applicable because the manufacturing method based on electric discharge machining according to the first embodiment allows the cladding portion to serve as a functionally graded material.

Moreover, according to the first embodiment, the cobalt-based hard alloy is overlaid on the sliding-contact surface of the valve rod 9 or the bushing 10 by electric discharge machining, thus allowing formation of an oxide film to be minimized. Consequently, possible sticking can be prevented in spite of a reduced gap between the valve rod 9 and the bushing 10. Furthermore, when the base materials of the valve rod 9 and the bushing 10 are changed to the same material comprising the above-described ferrite, martensitic, or austenitic heat resistant alloy steels, a difference in elongation between the base materials is avoided which results from a difference in the coefficient of linear expansion between the base materials. This advantageously enables a further reduction in the gap between the valve rod 9 and the bushing 10. As a result, the gap between the valve rod 9 and the bushing 10 according to the first embodiment is smaller than the gap according to the conventional technique, enabling a reduction in the amount of steam leaking through the gap between the valve rod 9 and the bushing 10. Therefore, a very efficient and reliable valve apparatus can be implemented.

### (Second Embodiment)

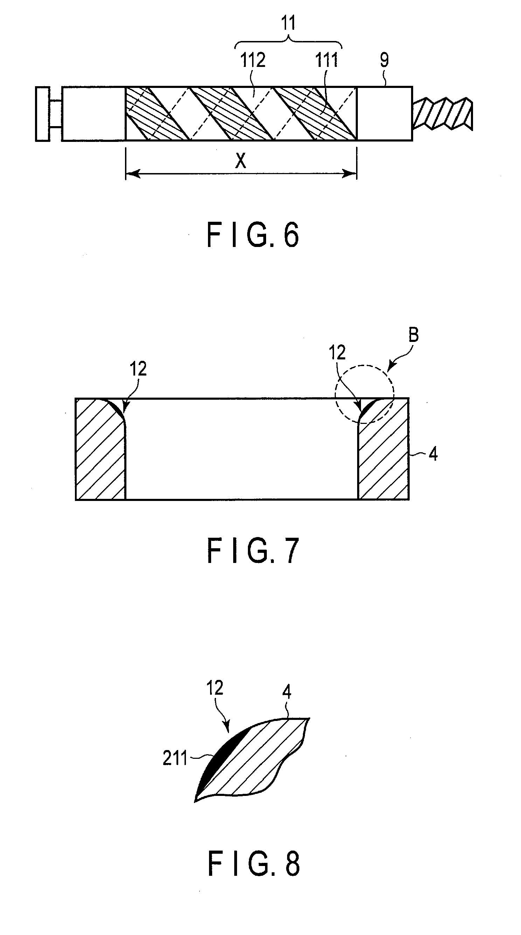

With reference again to FIGS. 1 to 5, and to FIG. 6, a second embodiment will be described.

The second embodiment illustrates a variation of the cladding portion 11 formed on the valve rod 9 of the steam valve 1 described in the first embodiment.

Basic parts of a configuration of a steam valve 1 and a cladding method according to the second embodiment are the same as the corresponding basic parts according to the first embodiment and will thus not be described below. Differences from the first embodiment will mainly be described below.

Here, an example in which a cladding portion 11 is formed on a valve rod 9 serving as a movable member will be described. Additionally, a similar cladding portion may, of course, also be formed on the bushing 10, which provides a sliding section along with the valve rod 9 and which serves as a stationary member.

FIG. 6 is a diagram showing the appearance of the valve rod 9 with the cladding portion 11 formed thereon according to the second embodiment.

The cladding portion 11 according to the first embodiment is formed by inducing a pulsed discharge between the electrode, which is formed of a molded body consisting mainly of a metal, and the treatment target portion of the valve rod 9 or the bushing 10, so as to weld and deposit the material of the electrode on the surface of the treatment target portion. This advantageously involves low input heat associated with electric discharge machining and allows cladding to be achieved without substantially deforming the workpiece. However, when the valve rod 9, which is large in length, entirely undergoes cladding, a difference in the coefficient of linear material between the base material and the cladding material may occur in the axial direction of the valve rod 9. Then, the valve rod 9 may be cracked in the axial direction due to the residual stress in the cladding portion 11.

Thus, the second embodiment uses the above-described valve rod holding apparatus (not shown in the drawings) to increase the amount of feeding of the valve rod 9 in the axial direction so that a spiral cladding portion 11 can be formed on the valve rod 9 at predetermined intervals in the axial direction.

According to the second embodiment, the cladding portion 11 is spirally formed, and then, the valve rod 9 with the cladding portion 11 serving as a sliding-contact surface is finished by machining to have a predetermined shape, predetermined dimensions, and a predetermined surface roughness.

The material for the electrode 102 providing the cladding portion 11 is, for example, any of the materials described in the first embodiment. Specifically, as shown in FIG. 6, the cladding portion 11 is formed by using, for example, a cobalt-based hard alloy as a first cladding portion 111, and chromium nitride (CrN) as a second cladding portion 112 located between the first cladding portions 111. The number of sub-portions forming the cladding portion 11 may be two as in the case of the combination of the first cladding portion 111 and the second cladding portion 112 or a plural number larger than two. The cladding width of each of the first cladding portion 111 and the second cladding portion 112 may be optionally set in accordance with the size or shape of the electrode 102.

Unlike a cladding portion entirely formed of a single type of electrode material, the spiral cladding portion 11 formed of a plurality of sub-portions using a combination of a plurality of types of electrode materials can serve as a buffering material that absorbs a difference in elongation between the base material and the cladding material resulting from a difference in the coefficient of linear expansion between the base material and the cladding material, in the axial direction of the valve rod 9. This reduces the residual stress in the cladding portion 11 to allow a possible crack in the cladding portion 11 to be prevented.

According to the second embodiment, the cladding portion 11 provided on the sliding-contact surface of the valve rod 9 or the bushing is formed by electric discharge machining using the cobalt-based hard alloy. Consequently, the cladding portion 11 serves as a functionally graded material with a graded composition and thus has a coefficient of linear expansion approximately equal to the coefficient of linear expansion of the base material of the valve rod 9 or the bushing 10 in the vicinity of the boundary where the cladding portion 11 is in contact with the base material. Thus, no difference occurs in the coefficient of linear expansion, allowing possible residual stress in the cladding portion 11 to be prevented.

Furthermore, according to the second embodiment, the spiral cladding portion formed of a plurality of sub-portions serves as a buffering material that absorbs a difference in elongation between the base material and the cladding portion resulting from a difference in the coefficient of linear expansion between the base material and the cladding portion, in the axial direction of the valve rod 9 or the bushing 10. This reduces not only the welding residual stress in the valve rod 9 in a circumferential direction but also the welding residual stress in the valve rod 9 in the axial direction to allow possible cracking in the cladding portion 11 to be prevented.

As described above, according to the first and second embodiments, the cladding portion 11 can serve as a functionally graded material regardless of the type of the combination of the base material of the valve rod 9 or the bushing 10 and the electrode material providing the cladding portion 11. This enables a reduction in the residual stress in the cladding portion 11 to allow possible cracking in the cladding portion 11 to be prevented.

The description of the first and second embodiments relates to the formation of the cladding portion 11 on the valve rod 9 of the valve apparatus. It is to be noted that, for example, the cladding portion 11 may be formed only on the bushing 10 or both on the valve rod 9 and on the bushing 10.

In general, the valve apparatus comprises a large number of sliding sections such as valve rods and bushings. The conventional technique applies nitriding treatment to the surfaces of almost all of the sliding sections, and has micro gaps between the sliding sections. Thus, the conventional technique disadvantageously involves, for example, reduced wear resistance and adhesion of oxide films to the sliding sections. In other words, such valve apparatuses all have similar disadvantages in the sliding sections, and given the future adaptation of steam conditions including a steam temperature higher than in the conventional technique, and steam pressures higher than current levels, certain measures need to be taken. This also applies to, for example, sliding sections of a seal ring 8 of an upper cover 6 and a valve body 5. Thus, the combination of the materials and the manufacturing method described above in the embodiments are effectively applicable. In this case, the valve rod 9 may be replaced with the valve body 5, and the bushing 10 may be replaced with the seal ring 8.

Moreover, for the sliding sections according to the first and second embodiments, the relative relation between the valve rod or the like and the bushing or the like and the structures of the valve rod or the like and the bushing or the like remain unchanged not only when the sliding sections are involved in linear movement (axial motion), as in the case of the valve rod 9 and the bushing 10, but also when the valve rod 9 moves rotationally (moves in the circumferential direction), for example, as in the case of a butterfly valve (not shown in the drawings). Thus, even in the latter case, the sliding sections are effectively applicable.

### (Third Embodiment)

With reference again to FIG. 1, and to FIGS. 7 to 12, a third embodiment will be described.

In the first embodiment, the technique for forming the cladding portion 11 on the valve rod 9 or the bushing 10 has been described in detail. In the third embodiment, a technique for forming a cladding portion 11 on a valve seat 4 or a valve body 5 will be described in detail.

Basic parts of a configuration of a steam valve 1 and a cladding method according to the third embodiment are the same as the corresponding basic parts according to the first embodiment and will thus not be described below. Differences from the first embodiment will mainly be described below.

A cladding portion 211 is integrally formed on an abutting contact portion of at least one of the valve body 5 or valve seat 4 shown in FIG. 1. The cladding portion 211 is formed by inducing a pulsed discharge between an electrode, which is formed of molded body consisting mainly of a metal, and a treatment target portion of the valve body 5 or the valve seat 4, so as to weld and deposit the material of the electrode on the surface of the treatment target portion.

Here, an example in which the cladding portion 211 is formed on the valve seat 4 serving as a stationary member will be described. Additionally, a similar cladding portion may, of course, be formed on the valve body 5, which provides an abutting contact portion along with the valve seat 4 and which serves as a movable member.

The principle of the cladding method has been described using FIG. 4.

FIG. 7 is a vertical cross-sectional view showing the shape of a seat portion of the valve seat 4. FIG. 8 is an enlarged vertical cross-sectional view showing a portion B shown in FIG. 7.

As shown in FIG. 8, the cladding portion 211 is formed on a seat portion 12 of the valve seat 4 all along the circumferential direction. The abutting contact portion is then finished such that the surface of the abutting contact portion is formed into a curved surface.

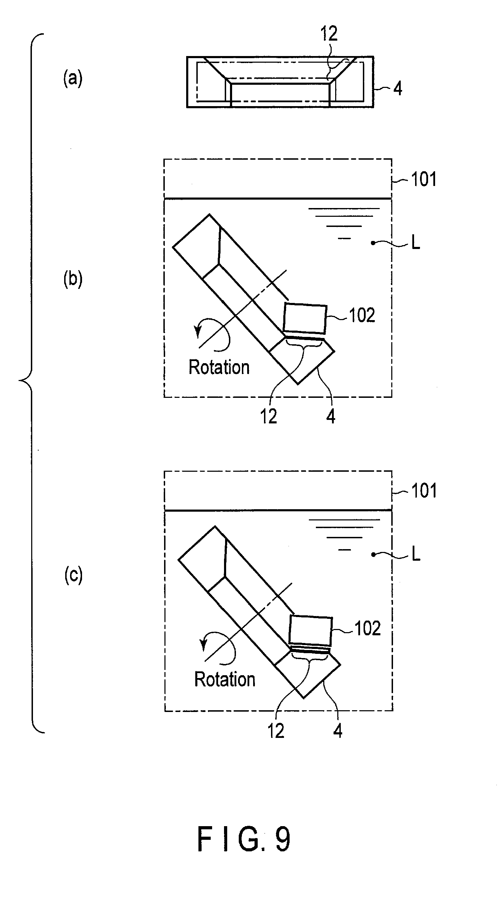

Now, an example of a specific method of manufacturing the valve seat 4 integrated with the cladding portion 211 will be described with reference to FIG. 9.

In this manufacturing method, a process of forming the cladding portion 211 on the seat portion 12 of the valve seat 4 includes a (I) thin-film forming step and an (II) cladding layer forming step described below.

### (I) Thin-film forming step

The valve seat 4 (raw material) shown in (a) of FIG. 9 is set in position in a processing tank 101 in an electric discharge machine (illustration of the electric discharge machine is mostly omitted) where electrically insulating oil L is filled in the processing tank 101 as shown in (b) of FIG. 9.

The valve seat 4 is machined flat, and is rotated at a very low speed by a rotating apparatus (not shown in the drawings). Furthermore, the plane of the seat portion 12 of the valve seat 4 and the plane of an electrode 102 are disposed opposite each other.

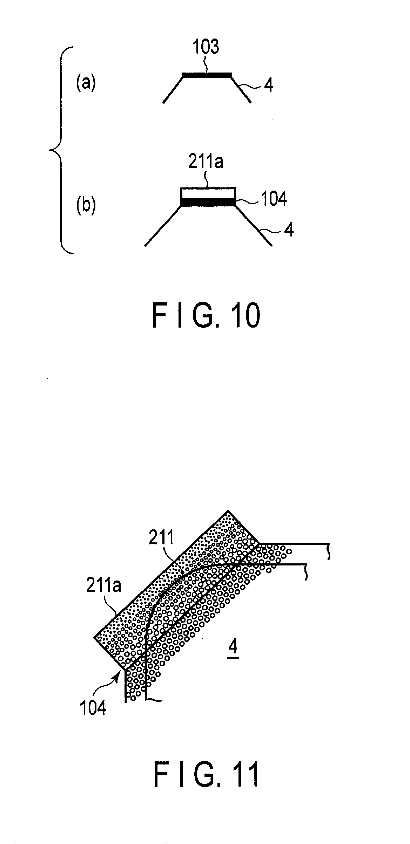

A pulsed discharge is induced in oil L stored in the processing tank 101 between the valve seat 4 and a tip surface of the electrode 102 with a micro gap held between the valve rod 9 and the tip surface of the electrode 102. The resultant discharge energy is used to deposit, diffuse, and/or weld the material of the electrode 102 on the valve seat 4 to form a thin film 103 on the valve seat 4. This is shown in (a) of FIG. 10.

The phrase "deposit, diffuse, an/or weld" means to include all of the following: "deposition", "diffusion", "welding", "a mixture of two phenomena including deposition and diffusion", "a mixture of two phenomena including deposition and welding", "a mixture of two phenomena including diffusion and welding", and "a mixture of three phenomena including deposition, diffusion, and welding".

Here, the electrode 102 is a shaped electrode comprising a molded body formed by compressing a powder consisting mainly of a metal based on pressing or performing heating treatment on the powder. A suitable material for the electrode 102 is a cobalt-based hard alloy or a nickel-based hard alloy, which offers thermal shock resistance and oxidation resistance and which has a higher hardness than a valve base material.

The electrode 102 may be shaped using, instead of compression such as pressing, another well-known manufacturing method.

### (II) Cladding layer forming step

After the (I) thin-film forming step ends, a pulsed discharge is induced in the oil L in the processing tank 101 between the seat portion 12 of the valve seat 4 and the tip surface of the electrode 102, with a micro gap held between the seat portion 12 and the tip surface of the electrode 102 as shown in (c) of FIG. 9. The resultant discharge energy is used to grow a thin film 103 formed on the seat portion 12 of the valve seat 4 to form a cladding portion 211a on the seat portion 12 of the valve seat 4. This is shown in (a) of FIG. 10. Moreover, the formation of the cladding portion 211a is specifically shown in FIG. 11.

At this time, in the vicinity of the boundary between the cladding portion 211a and the base material of the valve seat 4, a fusion portion (fusion layer) 104 is formed which has a graded composition with a composition ratio varying in a thickness direction in a graded manner. Here, the thickness of the fusion portion 104 is set to, for example, 20 µm or less by selecting appropriate discharge conditions when the cladding portion 11a is formed (because, when the thickness of the fusion layer 104 exceeds 20 µm, the amount of input heat increases to reduce the strength of the base material). This allows the adhesion strength of the cladding portion 211a to be improved while preventing the base material of the valve seat 4 from being deformed.

After the cladding, a part of the cladding portion 211a (and a part of the raw material of the valve seat 4) is machined to finish an abutting contact portion so that the abutting contact portion is shaped to have a curved surface. Thus, the valve seat 4 with the cladding portion 211 is completed.

The third embodiment adopts the manufacturing method based on electric discharge machining and thus involves low input heat. This allows the cladding to be performed on a workpiece without substantially deforming the workpiece. Thus, although the thickness of the cladding portion 211 is not limited, since an increased thickness leads to heat generation as a result of flow of a current through the cladding portion 211, the thickness is set to 0.1 mm or more and desirably approximately 1 mm so as to sufficiently demonstrate the properties of the cobalt-based hard alloy itself (for example, the properties based on hardness).

Moreover, the raw material subjected to cladding by electric discharge machining is planar, and the curved surface portion of the seat portion 12, which is brought into abutting contact with the valve seat 4 after the cladding, is finished by machining to have a predetermined shape, predetermined dimensions, and a predetermined surface roughness. Consequently, the hard alloy remains on a portion of the valve seat which corresponds to a vertex (center), and peripheral areas of this portion have a graded composition increasingly similar to the composition of the base material, thus further suppressing a difference in the coefficient of linear expansion between the cladding portion and the base material. Such an effect is obtained both for the valve seat 4 and for the valve body 5, in which the seat portion 12, brought into abutting contact with the cladding portion, has a curved surface portion. Therefore, the manufacturing method is effectively applicable to components other than the valve body 5 and the valve seat 4 as long as the components can be curved around the vertex of a cladding portion formed on a planar raw material.

According to the third embodiment, the cladding portion 211 provided on the valve body 5 or the seat portion 12 of the valve seat 4 in the valve apparatus is formed by electric discharge machining using a cobalt-based hard alloy or the like in the circumferential direction of the seat portion 12. Consequently, the cladding portion 211 serves as a functionally graded material with a graded composition and thus has a coefficient of linear expansion approximately equal to the coefficient of linear expansion of the base material of the valve body 5 or the valve seat 4 in the vicinity of the boundary where the cladding portion 211 is in contact with the base material. Thus, approximately no difference occurs in the coefficient of linear expansion, inhibiting possible residual stress in the cladding portion 211. This allows possible cracking in the valve body 5 or the seat portion 12 of the valve seat 4 to be prevented.

Furthermore, the third embodiment involves approximately no difference in the coefficient of linear expansion, thus enabling extension of the range of selection of the base material of the valve body 5 or the valve seat 4 and the material of the cladding portion 211 and the combination of the materials in accordance with steam temperature and high temperature strength. Examples of the base material of the valve body 5 or the valve seat 4 include chromium-molybdenum steel, chromium-molybdenum-vanadium steel, chromium-molybdenum-tungsten-vanadium steel, 9% chromium-containing steel, 12% chromium-containing steel, an Ni-based heat resistant alloy, and a Co-based heat resistant alloy. It is to be noted that, the manufacturing method based on electric discharge machining according to the third embodiment is, of course, applicable even to a new material developed in the future in response to more demanding steam conditions.

A material for the electrode 102 providing the cladding portion 211 other than the cobalt-based hard alloy or the nickel-based hard alloy may be used. That is, a hard shaped electrode is possible which is formed using a mixture of a powder of any of the above-described hard alloys and a powder of fine ceramics, if available, which offer thermal impact resistance and oxidation resistance and which have a higher hardness than the valve base material. Even if a new material is developed in the future in response to more demanding steam conditions, the material is of course applicable because the manufacturing method based on electric discharge machining according to the third embodiment allows the cladding portion 211 to serve as a functionally graded material.

As described above, according to the third embodiment, the cladding portion 211 can serve as a functionally graded material regardless of the type of the combination of the base material of the valve body 5 or the valve seat 4 and the electrode material providing the cladding portion 211. This enables a reduction in the residual stress in the cladding portion 211 to allow possible cracking in the cladding portion 11 to be prevented.

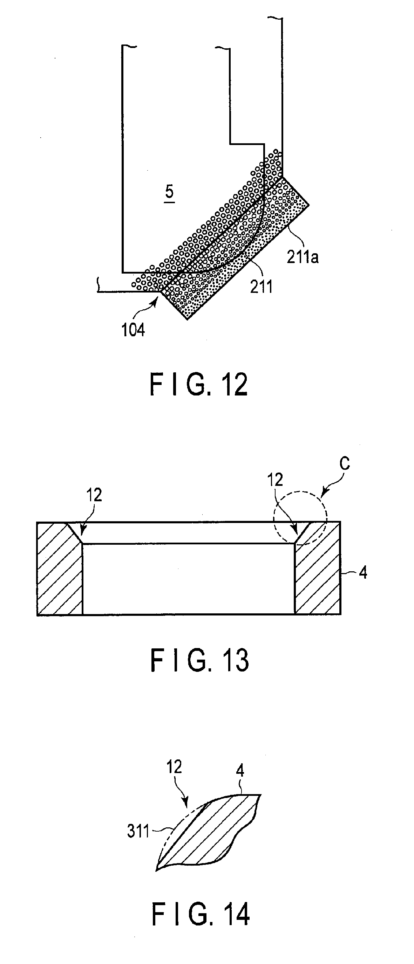

The description of the third embodiment relates to the formation of the cladding portion 211 on the seat portion 12 of the valve seat 4 of the steam valve. It is to be noted that, for example, the cladding portion 211 may be formed only on the seat portion of the valve body 5 or both on the seat portion 12 of the valve seat 4 and on the valve body 5. When the cladding portion 211 is formed on the seat portion of the valve body 5, first, such a cladding portion 211a as shown in FIG. 12 is formed using a technique similar to the technique used to perform cladding on the seat portion of the valve seat 4 as described above. After the cladding, a part of the cladding portion 211a (and a part of the raw material of the valve body 5) may be machined to finish an abutting contact portion so that the abutting contact portion is shaped to have a curved surface. Thus, the valve body 5 with the cladding portion 211 may be completed.

### (Fourth Embodiment)

Now, a fourth embodiment will be described with reference again to FIG. 1, and to FIGS. 13 to 16.

In the third embodiment, the technique for forming the cladding portion 11 on the valve seat 4 during manufacturing of the steam valve 1 or the valve seat 4 has been described in detail. In the fourth embodiment, a technique for forming the cladding portion 11 on the valve seat 4 during repair of the manufactured steam valve 1 or valve seat 4 will be described.

Description will be given taking the valve seat 4 as an example. Alternatively, the fourth embodiment is applicable to members such as a valve body 5, a seal ring 8, a valve rod 9, and a bushing 10.

Basic parts of a configuration of the steam valve 1 and a cladding method according to the fourth embodiment are the same as the corresponding basic parts according to the third embodiment and will thus not be described below. Differences from the third embodiment will mainly be described below.

FIG. 13 is a vertical cross-sectional view showing the shape of a seat portion formed before cladding is performed on the valve seat 4 shown in FIG. 1. Furthermore, FIG. 14 is an enlarged vertical cross-sectional view showing a portion C shown in FIG. 13.

After the valve seat 4 is exposed to a hot fluid, damage such as a crack is found in a cladding layer on a seat portion 12. Thus, the damaged area is designated as a repair target portion. As shown in FIG. 13 and FIG. 14, the entire circumferential portion of the seat portion 12 is removed by machining to a depth where none of the damage or defect in the repair target portion is present. An alternate long and two short dashes line in FIG. 14 indicates the shape 311 of the damaged portion before removal (that is, a completed shape).

Subsequently, in order to clad the repair target portion with a hard alloy, a technique similar to the technique according to the third embodiment is used to induce a pulsed discharge between an electrode and the repair target portion of the valve seat 4 with a micro gap held between the electrode and the valve seat 4 so that the resultant discharge energy allows the material of the electrode to be welded and deposited on the surface of the repair target portion of the valve seat 4. This method involves low heat input and thus allows cladding to be achieved without substantially deforming a workpiece. Furthermore, the component of the electrode and the workpiece are joined together while being melted, advantageously preventing the cladding portion from being peeled off. The method is thus suitable for repair of the valve seat 4 for reuse.

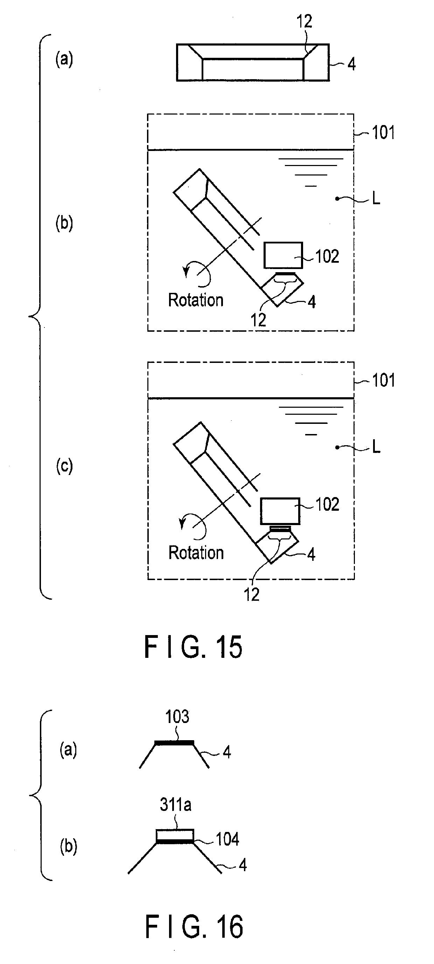

Now, an example of a specific method of repairing the valve seat 4 will be described with reference to FIG. 15.

In this repair method, a process of forming the cladding portion 11 on the surface of the valve rod 9 includes a (I) thin-film forming step and an (II) cladding layer forming step described below.

### (I) Thin-film forming step

The valve seat 4 (with the seat portion 12 machined flat) shown in (a) of FIG. 15 is set in position in a processing tank 101 in an electric discharge machine (illustration of the electric discharge machine is mostly omitted) where electrically insulating oil L is filled in the processing tank 101 as shown in (b) of FIG. 15.

The damage or defect is removed from the repair target portion of the valve seat 4, and the valve seat 4 is machined flat. The valve seat 4 is rotated at a very low speed by a rotating apparatus (not shown in the drawings). Furthermore, the plane of the seat portion 12 of the valve seat 4 and the plane of an electrode 102 are disposed opposite of each other.

A pulsed discharge is induced in oil L stored in a processing tank 101 between the seat portion 12 of the valve seat 4 and a tip surface of the electrode 102 with a micro gap held between the seat portion 12 and the tip surface of the electrode 102. The resultant discharge energy is used to deposit, diffuse, and/or weld the material of the electrode 102 on the seat portion 12 of the valve seat 4 to form a thin film 103 on the seat portion 12 of the valve seat 4. This is shown in (a) of FIG. 16.

The phrase "deposit, diffuse, an/or weld" means to include all of the following: "deposition", "diffusion", "welding", "a mixture of two phenomena including deposition and diffusion", "a mixture of two phenomena including deposition and welding", "a mixture of two phenomena including diffusion and welding", and "a mixture of three phenomena including deposition, diffusion, and welding".

Here, the electrode 102 is a shaped electrode comprising a molded body formed by compressing a powder of the same material as the cladding material of the repair target portion based on pressing or performing heating treatment on the powder.

The electrode 102 may be shaped using, instead of compression such as pressing, another well-known manufacturing method.

### (II) Cladding layer forming step

After the (I) thin-film forming step ends, a pulsed discharge is induced in the oil L in the processing tank 101 between the seat portion 12 of the valve seat 4 and the tip surface of the electrode 102, with a micro gap held between the seat portion 12 and the tip surface of the electrode 102 as shown in (c) of FIG. 15. The resultant discharge energy is used to grow a thin film 103 formed on the seat portion 12 of the valve seat 4 to form a cladding portion 311a on the seat portion 12 of the valve seat 4. This is shown in (a) of FIG. 16.

At this time, in the vicinity of the boundary between the cladding portion 311a and the base material of the valve seat 4, a fusion portion (fusion layer) 104 is formed which has a graded composition with a composition ratio varying in a thickness direction in a graded manner. Here, the thickness of the fusion portion 104 is set to, for example, 20 µm or less by selecting appropriate discharge conditions when a cladding portion 311 is formed (because, when the thickness of the fusion layer 104 exceeds 20 µm, the amount of input heat increases to reduce the strength of the base material). This allows the adhesion strength of the cladding portion 311a to be improved while preventing the base material of the valve seat 4 from being deformed.

After the cladding, a part of the cladding portion 311a is machined to finish an abutting contact portion so that the abutting contact portion is shaped to have a curved surface. Thus, the valve seat 4 with the cladding portion 311 is completed.

The fourth embodiment adopts the manufacturing method based on electric discharge machining and thus involves low input heat. This allows the cladding to be performed on the workpiece without substantially deforming the workpiece. Thus, although the thickness of the cladding portion 311 is not limited, since an increased thickness leads to heat generation as a result of flow of a current through the cladding portion 311, the thickness is set to 0.1 mm or more so as to sufficiently demonstrate the properties of a cobalt-based hard alloy itself (for example, the properties based on hardness) and is also set equal to or larger than the removal depth (thickness) of the repair target portion.

The curved surface portion of the seat portion 12, which is brought into abutting contact with the valve seat 4 after the cladding, is finished by machining to have a shape, dimensions, and a surface roughness observed before the seat portion 12 is exposed to a hot fluid. Consequently, the hard alloy remains on a portion of the valve seat which corresponds to a vertex (center), and peripheral areas of this portion have a graded composition increasingly similar to the composition of the base material, resulting in no difference in the coefficient of linear expansion between the cladding portion and the base material. This inhibits possible residual stress in the cladding portion 311 of the repair target portion, allowing a possible crack in the repair target portion to be prevented.

In the description of the fourth embodiment, for the repair target portion, the entire circumferential portion of the seat portion 12 of the valve seat 4 is removed. It is to be noted that a partial repair may be enabled by configuring the repair target portion by machining the seat portion 12 flat so that the plane of only a particular circumferential part of the seat portion 12 is located opposite the plane of the electrode 102.

As described above, according to the fourth embodiment, if a movable member or a stationary member exposed to a hot fluid is damaged, the member can be reused by forming a cladding portion 311 without the need to dispose of the member. This enables an increase in the service life of components and a reduction in aging repair or replacement costs. Thus, inexpensive products can be provided.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A valve apparatus (1) **characterized by** comprising:
a movable member (9 or 5) operating in conjunction with opening and closing of a valve, and a stationary member (10, 4, or 8) in sliding or abutting contact with the movable member (9 or 5); and
a cladding portion (11 or 211) that is integrally formed on a sliding-contact surface or an abutting contact surface of at least one of the movable member (9 or 5) or the stationary member (10, 4, or 8),
wherein the cladding portion (11 or 21) is formed by inducing a pulsed discharge between an electrode (102), which is formed of a molded body consisting mainly of a metal, and a treatment target portion of the movable member (9 or 5) or the stationary member (10, 4, or 8), so as to weld and deposit a material of the electrode (102) on a surface of the treatment target portion.

2. The valve apparatus (1) according to claim 1, **characterized in that** the movable member comprises a valve body (5) or a valve rod (9), and the stationary member comprises a seal ring (8) in sliding contact with the valve body (5) or a bushing (10) in sliding contact with the valve rod (9).

3. The valve apparatus (1) according to claim 1, **characterized in that** the movable member comprises a valve body (5), and the stationary member comprises a valve seat (4) in abutting contact with the valve body (5).

4. The valve apparatus (1) according to any one of claims 1 to 3, **characterized in that** the cladding portion (11 or 211) comprises a penetrant diffusion layer formed by penetration and diffusion of particles of a material of the electrode (102) through the surface of the treatment target portion and a deposit layer formed by welding and deposition of the particles of the material of the electrode (102) on the penetrant diffusion layer.

5. The valve apparatus (1) according to any one of claims 1 to 4, **characterized in that** a graded composition of the material of the electrode (102) and a material of the treatment target portion is formed in a vicinity of a boundary between the cladding portion (11 or 211) and the treatment target portion.

6. The valve apparatus (1) according to any one of claims 1 to 5, **characterized in that** the cladding portion (11 or 211) and the treatment target portion have an approximately equal coefficient of linear expansion in a vicinity of the boundary.

7. The valve apparatus (1) according to claim 2, **characterized in that** the cladding portion (11) is formed of a material containing at least one of a cobalt-based hard alloy, a nickel-based hard alloy, or a ceramic material.

8. The valve apparatus (1) according to claim 3, **characterized in that** the cladding portion (211) is formed of a material containing a cobalt-based hard alloy or a nickel-based hard alloy.

9. The valve apparatus (1) according to claim 2, **characterized in that** the cladding portion (11) is formed of a plurality of sub-portions of different types of materials on a sliding-contact surface of the valve body (5), the valve rod (9), the seal ring (8), or the bushing (10) so as to extend spirally in an axial direction.

10. The valve apparatus (1) according to claim 3, **characterized in that** the cladding portion (211) has an abutting contact surface shaped to form a curved surface.

11. A method of manufacturing a valve apparatus (1) that includes a movable member (9 or 5) operating in conjunction with opening and closing of a valve, and a stationary member (10, 4, or 8) in sliding or abutting contact with the movable member (9 or 5), the method **characterized by** comprising:
forming a cladding portion (11 or 211) on a sliding-contact surface or an abutting contact surface of at least one of the movable member (9 or 5) or the stationary member (10, 4, or 8), by inducing pulsed discharge in an electrically insulating liquid or gas between an electrode (102), which is formed of a molded body consisting mainly of a metal, and a treatment target portion of the movable member (9 or 5) or the stationary member (10, 4, or 8), so as to weld and deposit a material of the electrode (102) on a surface of the treatment target portion.

12. A method of repairing a valve apparatus (1) that includes a movable member (9 or 5) operating in conjunction with opening and closing of a valve, and a stationary member (10, 4, or 8) in sliding or abutting contact with the movable member (9 or 5), the method **characterized by** comprising:
removing a plane of a damaged treatment target portion of a sliding-contact surface or an abutting contact surface of at least one of the movable member (9 or 5) or the stationary member (10, 4, or 8); and
forming a cladding portion (11 or 211) on the sliding-contact surface or the abutting contact surface of at least one of the movable member (9 or 5) or the stationary member (10, 4, or 8), by inducing a pulsed discharge in an electrically insulating liquid or gas between an electrode (102), which is formed of a molded body consisting mainly of a metal, and the treatment target portion, so as to weld and deposit a material of the electrode (102) on a surface of the treatment target portion.
